# EUROPEAN PATENT APPLICATION

(11) **EP 4 636 938 A1**
(43) Date of publication of application: **22.10.2025**
(21) Application number: 24852362.3
(22) Date of filing: 08.08.2024
(51) Int. Cl.: H01M 50/531, H01M 50/534, H01M 10/0562, H01M 10/052

(54) **LEAD TAB FOR BONDING TO ELECTRODE TAB AND ALL-SOLID-STATE BATTERY INCLUDING STRUCTURE HAVING LEAD TAB BONDED TO ELECTRODE TAB**

(30) Priority: 10.08.2023 KR 20230104686; 07.08.2024 KR 20240105049
(71) Applicant: LG Energy Solution, Ltd., Seoul 07335 (KR)
(72) Inventor: LEE, Jaegil, Daejeon 34122 (KR); WOO, Seunghe, Daejeon 34122 (KR); LEE, Dong Chan, Daejeon 34122 (KR); CHOI, Ran, Daejeon 34122 (KR)
(74) Representative: Goddar, Heinz J.
(86) International application number: PCT/KR2024/011766
(87) International publication number: WO 2025/034009

(57) **Abstract**

By bonding a lead tab of a specific material to electrode tabs with low welding energy, the problem of detachment of a negative electrode protective layer can be solved, and also, in an all-solid-state battery comprising the lead tab bonded to the electrode tabs, the electrolyte and lead tab do not contact each other thus not inducing a lithiation reaction, the lead tab for bonding to electrode tabs and all-solid-state battery comprising the lead tab bonded to the electrode tabs. The lead tab for bonding to electrode tabs forms a bonding portion by bonding with the electrode tabs of the electrode assembly for all-solid-state battery, in which the lead included in the bonding portion contains aluminum.

## Description

### [Technical Field]

The present application claims the benefit of priority to Korean Patent Application No. 10-2023-0104686 filed on August 10, 2023 and Korean Patent Application No. 10-2024-0105049 filed on August 07, 2024, the disclosures of which are incorporated herein by reference in their entirety.

The present invention relates to a lead tab for bonding to electrode tabs and an all-solid-state battery comprising the lead tab bonded to electrode tabs. More specifically, the present invention relates to a lead tab for bonding to electrode tabs and an all-solid-state battery comprising the lead tab bonded to electrode tabs, where the problem of detachment of a negative electrode protection layer can be solved by bonding the lead tab made of a specific material to the electrode tabs with low welding energy, and also, where the electrolyte does not come into contact with the lead tab, thereby not inducing lithiation reaction.

### [Background Art]

The growing interest in energy storage technologies, with applications ranging from cell phones, tablets, laptops, and camcorders to energy for electric vehicles (EVs) and hybrid electric vehicles (HEVs), has led to an increasing amount of research and development on electrochemical devices. In this regard, electrochemical devices have received the most attention, and the development of secondary batteries that can be charged and discharged has become a focus of interest. In recent years, the development of such batteries has led to research and development of new electrodes and battery designs in order to improve the capacity density and specific energy.

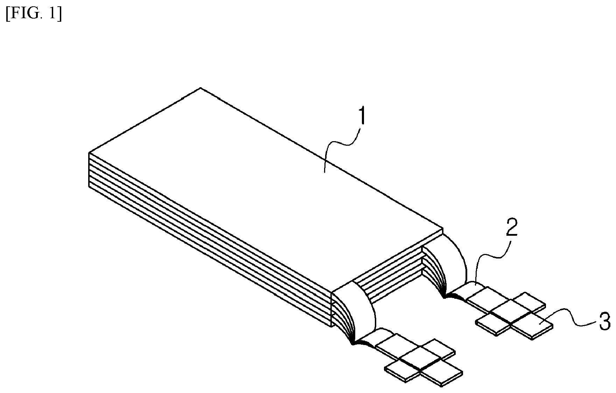

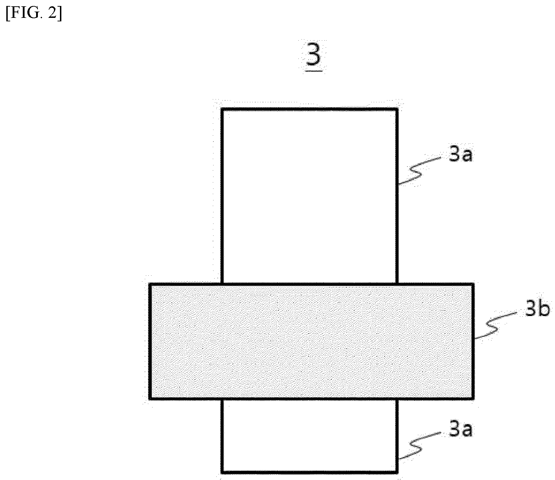

When manufacturing such secondary batteries, welding operations are performed to bind tabs between unit electrodes to obtain output suitable for the intended use, and during this process, electrode tabs and a lead tab are bonded. FIG. 1 is a perspective view showing the electrode tabs and the lead tab bonded in a conventional secondary battery, and FIG. 2 is a plan view of the lead tab bonded to the electrode tabs in a conventional secondary battery. As shown in FIG. 1, conventional secondary battery requires electrode tabs (positive electrode tabs or negative electrode tabs, 2) to electrically connect a positive electrode plate and a negative electrode plate constituting an electrode assembly 1 to an external device, and these electrode tabs are bonded by welding to a lead tab (positive electrode lead tab or negative electrode lead tab, 3) as shown in FIG. 2. The lead tab 3 includes a metal lead 3a and a lead film 3b locally disposed on one or both sides thereof, as shown in FIG. 2, in which the metal lead 3a on one side is bonded overlappingly with the electrode tabs.

More specifically, most secondary batteries employ ultrasonic welding, laser welding, or resistance welding to bond between negative electrode tabs (copper) or positive electrode tabs (aluminum) extending outwardly from an electrode of an electrode assembly and a lead tab (copper, nickel) as a separate member. For example, lithium-ion batteries use copper (Cu) as the negative electrode tabs and weld them to the lead tab (Ni) to bond the electrode tabs and the lead tab.

Meanwhile, from a safety perspective, an all-solid-state battery, which has no risk of explosion compared to lithium secondary battery, refers to a battery in which a liquid electrolyte is replaced with a solid one, and accordingly, since it does not use flammable solvents, there is no ignition or explosion due to decomposition reactions of a conventional electrolyte, thus safety can be significantly improved. Since such all-solid-state batteries can use lithium metal or lithium alloys as negative electrode materials, they have the advantage of dramatically improving the energy density per mass and volume of the battery. Furthermore, a protective layer (specifically, a layer located between the negative-electrode active material and the solid electrolyte to prevent contact between them) is disposed on the surface of such a lithium metal negative electrode, but when the negative-electrode tabs and the lead tab (copper, nickel) are bonded by welding, a problem of detachment of the negative-electrode protective layer occurs. This is because high welding energy is applied in an environment where the adhesion between the negative electrode and the negative electrode protective layer is inevitably low. Therefore, a method is required to bond the electrode tabs and the lead tab through welding, but prevent the negative electrode protective layer from being detached.

### [Detailed Description of Invention]

### [Technical Problems]

Therefore, it is an objective of the present invention to provide a lead tab for bonding to electrode tabs and an all-solid-state battery comprising the lead tab bonded to the electrode tabs, which can solve the problem of detachment of the negative electrode protective layer by bonding a lead tab made of a specific material to the electrode tabs using low welding energy, and also, in the all-solid-state battery in which the lead tab and electrode tabs are bonded, does not induce lithiation reactions as the electrolyte does not come into contact with the lead tab.

### [Technical Solution]

**In** order to achieve the aforementioned objective, the present invention provides a lead tab for bonding to electrode tabs of an electrode assembly for an all-solid-state battery to form a bonding portion, wherein the lead included in the bonding portion comprises aluminum.

The present invention also provides an all-solid-state battery comprising a positive electrode, a negative electrode, and a solid electrolyte interposed between the positive electrode and the negative electrode, wherein the lead tab is bonded to electrode tabs.

### [Effect of Invention]

According to the lead tab for bonding to electrode tabs of the present invention and the all-solid-state battery comprising the lead tab bonded to the electrode tabs, the problem of detachment of the negative electrode protective layer can be solved by bonding the lead tab made of a specific material to the electrode tabs using low welding energy, and through this, there is an advantage that the assembly stability of the battery is increased.

Also, according to the lead tab for bonding to electrode tabs of the present invention and the all-solid-state battery comprising the lead tab bonded to the electrode tabs, in the all-solid-state battery in which the lead tab and electrode tabs are bonded, there is an advantage that lithiation reactions are not induced as the electrolyte does not come into contact with the lead tab.

### [Brief Description of the Drawings]

FIG. 1 is a perspective view showing the bonding of electrode tabs and a lead tab in a conventional secondary battery.
FIG. 2 is a plan view of a lead tab bonded to electrode tabs in a conventional secondary battery.
FIG. 3 is a plan view showing the bonding of electrode tabs and a lead tab in a secondary battery.
FIG. 4 is a graph showing the performance of a battery according to an example of the present invention and a comparative example.
FIG. 5 is a graph illustrating the lifetime performance of a battery according to an example of the present invention.
FIG. 6 is a graph showing the lifetime performance of a battery according to a comparative example.

### [Best Mode for Carrying out the Invention]

Hereinafter, the present invention will be described in detail.

The lead tab for bonding to electrode tabs of the present invention, which forms a bonding portion by bonding with the electrode tabs of the electrode assembly for an all-solid-state battery, includes a lead containing aluminum in the bonding portion.

Generally, in the manufacture of secondary batteries, welding operations are performed to tie tabs between unit electrodes to obtain an output suitable for the application, in which a conventional lead tab, such as that shown in FIG. 2, is welded to electrode tabs, such as that shown in FIG. 1. Moreover, most secondary batteries generally adopt a method of bonding between negative electrode tabs (copper) or positive electrode tabs (aluminum) and a lead tab (copper, nickel) by ultrasonic welding, laser welding or resistance welding. Furthermore, a lithium-ion battery applies copper (Cu) as negative electrode tabs and bonds them with a lead tab (Ni) through welding method, thus bonding the electrode tabs and the lead tab.

Meanwhile, from a safety perspective, an all-solid-state battery, which has no risk of explosion compared to lithium secondary battery, is a battery in which a liquid electrolyte is replaced with a solid one, and such an all-solid-state battery can use lithium metal or lithium alloy as a negative electrode material, thus having the advantage of being able to dramatically improve energy density relative to the mass and volume of the battery. In addition, on a surface of this lithium metal negative electrode, a protective layer is disposed, at which time, when bonding the negative electrode tabs and the lead tab (copper, nickel) by a welding method, a problem occurs where the negative electrode protective layer becomes detached. This is because high welding energy is applied in an environment where the adhesion between the negative electrode and the negative electrode protective layer is inevitably low.

Therefore, the present applicant has invented a method to prevent the detachment of the negative electrode protection layer by bonding electrode tabs and a lead tab through a welding method, and by ensuring that the lead included in the bonding portion formed by bonding with the electrode tab of the all-solid-state battery electrode assembly contains aluminum. The following is a more detailed explanation of the lead tab for bonding to electrode tabs according to the present invention.

The lead constituting the lead tab for bonding to electrode tabs of the present invention is in a form of a sheet, similar to conventional ones, and can form a bonding portion by bonding or adhering to the electrode tabs. The lead that forms the bonding portion by bonding with the electrode tabs (corresponding to reference numeral 2 in FIG. 1) while constituting the lead tab for bonding to electrode tabs of the present invention corresponds to reference numeral 3a in FIG. 2. In other words, traditionally, copper or nickel was used for the lead of the lead tab, but in such case, in existing all-solid-state batteries, there was a problem of detachment of the negative electrode protection layer when the negative electrode tabs and the lead tab were bonded by welding. However, the present applicant has solved the problem of detachment of the negative electrode protection layer by applying aluminum to the lead of the lead tab, enabling bonding with the electrode tabs using low welding energy.

In other words, a lead tab for bonding to electrode tabs of the present invention is bonded to electrode tabs of an electrode assembly for an all-solid-state battery to form a bonding portion, wherein the lead included in the bonding portion comprises aluminum. The lead may comprise aluminum in an amount from 50 to 100 wt%, preferably from 70 to 100 wt%, more preferably from 85 to 100 wt%, and most preferably from 95 to 100 wt%, based on a total weight of the lead.

Furthermore, the lead may have a structure or form in which one metal is plated on a surface of another metal, for example, aluminum plated on a surface of a metal such as copper, manganese, silicon, magnesium, zinc, and nickel.

In addition, in case the lead comprises aluminum in a content of less than 100 wt% based on the total weight of the lead, the lead may further comprise one selected from a group consisting of: copper, manganese, silicon, magnesium, zinc, and nickel (here, meaning homogeneously mixed, not plated, state).

The lead tab for bonding with the electrode tabs of the present invention is preferably a lead tab for bonding with negative electrode tabs as described above, but can be applied for bonding with positive electrode tabs as needed. That is, the lead tab for bonding to electrode tabs can be applicable to one or more of bonding with positive electrode tabs and bonding with negative electrode tabs. In particular, considering the easiness of the bonding process, it may be preferable to apply the lead tab for bonding to electrode tabs, at the same time, for both bonding with positive electrode tabs and bonding with negative electrode tabs.

The lead tab for bonding with the electrode tabs of the present invention are also characterized in that they are not in contact with the electrolyte contained in the electrode assembly, which will be described in detail in the section entitled "all-solid-state batteries" that will follow.

Furthermore, the lead tab for bonding with the electrode tabs of the present invention may further comprise a lead film 3b locally disposed on one or both sides of the lead 3a, as shown in FIG. 2. The lead film may be made of the same material as the lead film included in a conventional lead tab, for example, polypropylene or the like.

Furthermore, preferably, the electrode tabs of the "electrode assembly for an all-solid-state battery" are electrode tabs of an electrode assembly for a sulfide-based all-solid-state battery.

Hereinafter, an all-solid-state battery according to the present invention will be described.

The all-solid-state battery comprises a structure in which the lead tabs described above are bonded to the electrode tabs. More specifically, the all-solid-state battery includes the lead tab described above, comprising: a positive electrode lead tab bonded to positive electrode tabs; and a negative electrode lead tab bonded to negative electrode tabs; and is characterized in that one or more leads among the positive electrode lead tab and negative electrode lead tab include aluminum and are bonded to the electrode tabs. Preferably, the all-solid-state battery is a sulfide-based all-solid-state battery.

In an example of the present invention, the all-solid-state battery may be manufactured including a positive electrode, a negative electrode, and a solid electrolyte interposed between the positive electrode and the negative electrode. Furthermore, the all-solid-state battery may be manufactured by any known method in any configuration known in the art.

The positive electrode may comprise an active material, a conductive material, and a binder in granular form or the like. Any positive electrode active material can be used without limitation as long as it can be used as a positive electrode active material in a conventional lithium-ion secondary battery. Furthermore, the positive-electrode active material may be a lithium transition metal oxide comprising one or more transition metals. For example, the positive-electrode active material may be selected from a group consisting of: LiCoO₂, LiNiO₂, LiMnO₂, Li₂MnO₃, LiMn₂O₄, Li(NiₐCo_{b}Mn_{c})O₂ (0<a<1, 0<b<1, 0<c<1, a+b+c=1), LiNi_{1-y}Co_{y}O₂ (0<y<1), LiCo_{1-y}Mn_{y}O₂, LiNi_{1-y}Mn_{y}O₂ (0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2), and combinations thereof.

The above-mentioned positive electrode conductive material can also be used without limitation as long as it is usable as a positive electrode conductive material in conventional lithium-ion secondary batteries. For example, the positive electrode conductive material can be conventional materials such as carbon nanotubes (single-walled carbon nanotubes, multi-walled carbon nanotubes) or carbon black.

The positive electrode binder is mixed with the positive-electrode active material and positive electrode conductive material to bind each component and help particle growth. The binder may be an organic binder, and the organic binder refers to a binder that is dissolved or dispersed in an organic solvent, especially N-methylpyrrolidone (NMP), and is distinguished from an aqueous binder that uses water as a solvent or dispersant. For example, the binder may be selected from a group consisting of: polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamide imide, polyethylene, polypropylene, ethylene-propylene-diene monomer (EPDM), sulfonated EPDM, styrene butadiene rubber and fluorine rubber, but is not limited thereto. Furthermore, the weight ratio of the above-mentioned positive electrode active material, positive electrode conductive material, and binder included in the positive electrode also follows conventional standards.

The negative electrode may comprise a negative-electrode active material that can be used in a conventional lithium-ion secondary battery. For example, the negative-electrode active material may include one or more selected from: carbon such as non-graphitizable carbon, graphitic carbon, etc.; metal composite oxides such as LixFe₂O₃ (0≤x≤1), LiₓWO₂(0≤x≤1), SnₓMe₁₋ₓMe'_{y}O_{z} (Me: Mn, Fe, Pb, Ge; Me': Al, B, P, Si, elements from groups 1, 2, 3 of the periodic table, and halogens; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni based materials; titanium oxide; lithium titanium oxide; and the like.

The solid electrolyte of all-solid-state batteries can be broadly classified into organic (polymer-based) solid electrolytes and mineral-based solid electrolytes. Among these, mineral-based solid electrolytes can be divided into sulfide-based and oxide-based types. Currently, the most technologically developed solid electrolyte is the sulfide-based solid electrolyte, which has been developed to the point where its ionic conductivity approaches that of organic liquid electrolytes. As described above, sulfide-based solid electrolyte not only has high ionic conductivity among solid electrolytes, ranging from 10⁻³ S/cm to 10⁻² S/cm (High Ionic conductivity), but also has excellent thermal stability (Thermal stability), and has the advantage of being soft, making good contact with interfaces, which is advantageous for reducing resistance (Interfacial compatibility).

Any of the solid electrolytes described above can be used in the present invention, but a sulfide-based solid electrolyte is more preferred. The sulfide-based solid electrolyte may comprise a lithium salt, in which the lithium salt is an ionizable lithium salt, which may be represented by Li⁺ X. The anions of these lithium salts are not particularly limited, but examples thereof include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like.

Further, the sulfide-based solid electrolyte may comprise a Li-P-S based glass or a Li-P-S based glass-ceramic, which contains sulfur (S) and has an ionic conductivity of a metal belonging to the first or second group of the periodic table. Non-limiting examples of such sulfide-based solid electrolytes include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS and the like, and the sulfide-based solid electrolyte may include one or more of these. Moreover, the sulfide-based solid electrolyte included as a base material in the solid electrolyte for all-solid-state batteries of the present invention is not limited thereto, and may be composed of those that constitute conventional sulfide-based solid electrolytes.

Meanwhile, according to the research results of the applicant, when aluminum-containing leads come into contact with an electrolyte, a lithiation reaction occurs, making it impossible to operate the battery. Accordingly, the applicant has prevented contact between a solid electrolyte and a lead tab for bonding to electrode tabs included in an all-solid-state battery by preventing contact between the lead tab and the solid electrolyte. More specifically, the applicant has solved the above problem by disposing the end of the lead tab in the direction of bonding with the electrode tabs at a distance of 1.1 to 5 times, preferably 1.2 to 3 times, more preferably 1.5 to 2.5 times the average distance between the electrode end and the electrolyte end from one side end of the electrode assembly from which the electrode tabs are drawn out.

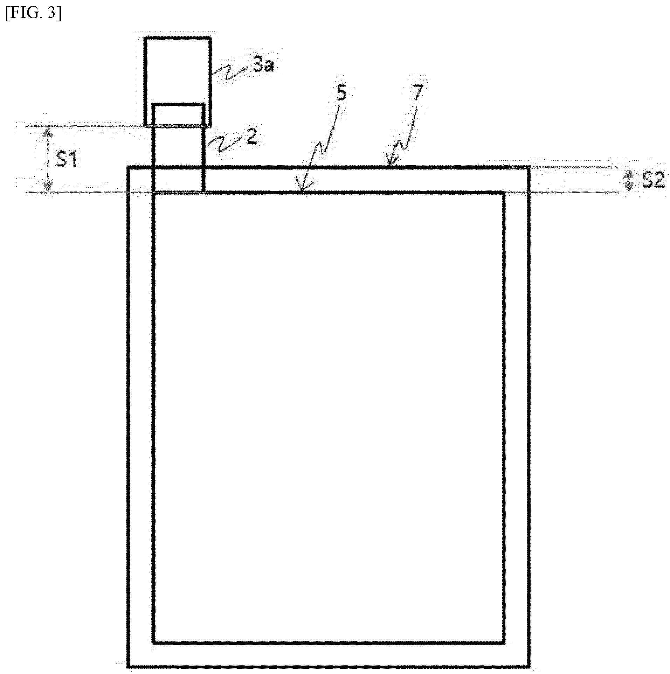

FIG. 3 is a top view illustrating the bonding of electrode tabs and the lead tab in the secondary battery. Referring to FIG. 3, the position of the end of the lead tab in the direction of bonding with the electrode tabs will be described in more detail. The position of the end of the lead tab 3a in the direction of bonding with the electrode tabs 2 means a position separated by the distance between the electrode end 5 and the end of the lead tab 3a (S1 in FIG. 3) from the electrode end 5 in the direction where the electrode tabs 2 are drawn out. Also, the average distance between the electrode end 5 and the electrolyte end 7 (S2 in FIG. 3) means the value obtained by adding the maximum distance and the minimum distance between the electrode end 5 and the electrolyte end 7 and then dividing by 2.

The present invention also provides a battery module comprising the all-solid-state battery as a unit battery, a battery pack comprising the battery module, and a device comprising the battery pack as a power source. Specific examples of the device include power tools that are driven by electric motors; electric vehicles including Electric Vehicles (EV), Hybrid Electric Vehicles (HEV), Plug-in Hybrid Electric Vehicles (PHEV); electric two-wheeled vehicles including electric bicycles (E-bikes), electric scooters (E-scooters); electric golf carts; and power storage systems; but are not limited thereto.

Examples of the present invention are described below for the purpose of illustrating the present invention, but it will be apparent to those skilled in the art that various changes and modifications are possible within the scope of the present invention and the technical idea, and that such changes and modifications fall within the scope of the appended claims.

### [Example 1] Manufacture of All-solid-state Battery

First, an electrode assembly was manufactured by stacking unit cells each comprising a positive electrode including a lithium transition metal oxide as a positive-electrode active material, a lithium metal negative electrode, and a solid electrolyte (Li₆ PS₅ Cl) interposed therebetween. The end of the lead tab in the direction of bonding with the electrode tabs was disposed at a distance twice the average distance between the electrode end and the electrolyte end from the edge of the electrode assembly from which the electrode tabs are drawn. An aluminum lead was then bonded to each of the positive electrode tabs and the negative electrode tabs.

### [Comparative example 1] Manufacture of All-solid-state Battery

An all-solid-state battery was manufactured by performing the same as in example 1 above, except that nickel leads were bonded to both the negative and positive electrode tabs instead of aluminum leads.

### [Comparative example 2] Manufacture of All-solid-state Battery

An all-solid-state battery was manufactured by performing the same as in example 1 above, except that the end of the lead tab in the direction of bonding with the electrode tabs was positioned at a distance one time the average distance of the electrode end and the electrolyte end from one edge of the electrode assembly from which the electrode tabs are drawn so that the electrolyte film contacts the lead.

### [Experimental Example 1] Evaluating the Performance of an All-Solid-State Battery

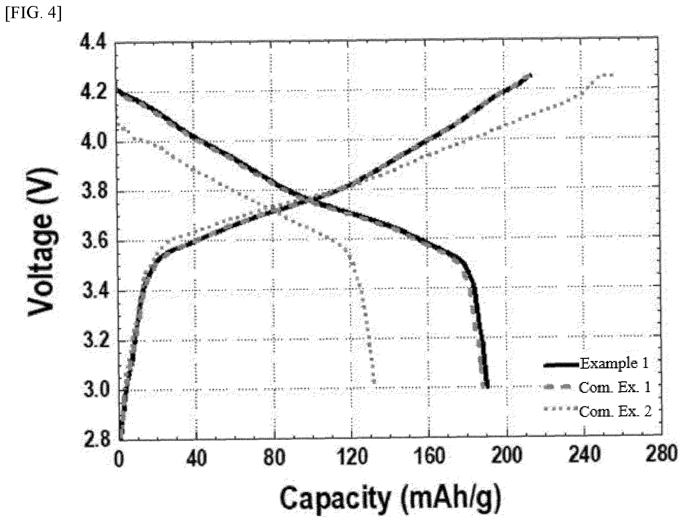

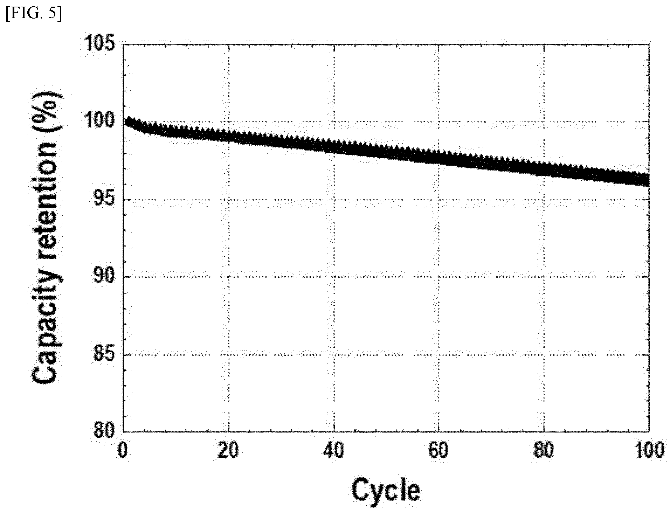

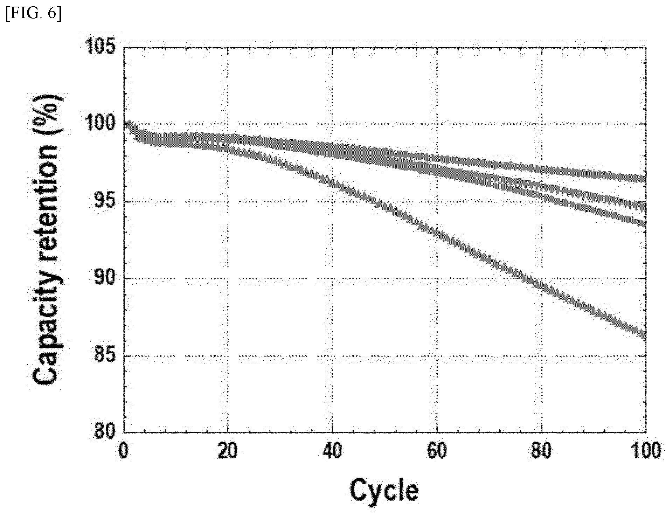

The all-solid-state batteries manufactured in the above example 1, comparative examples 1 and 2 were operated under the following charge-discharge conditions at an operating voltage range of 4.25V-3.0V and an operating temperature of 60°C to evaluate their performance during the first cycle (FIG. 4) or 100 cycles (FIGS. 5 and 6), and the results are shown in FIGS. 4 to 6.
- Charging conditions: 0.1C, 4.25V CC/CV, 0.05C cut-off
- Discharge conditions: 0.1C, 3.0V, CC

FIG. 4 is a graph illustrating the performance of the batteries according to the example of the present invention and the comparative examples, FIG. 5 is a graph illustrating the lifetime performance of a battery according to the example of the present invention (example 1), and FIG. 6 is a graph illustrating the lifetime performance of a battery according to the comparative example (comparative example 1). As a result of evaluating the performance of the all-solid-state batteries manufactured in the above example 1, comparative examples 1 and 2, as shown in FIG. 4, the all-solid-state battery of example 1, which used an aluminum lead and where the electrolyte film and lead did not contact, was capable of normal charging and discharging, unlike the all-solid-state battery of comparative example 2, which used the aluminum lead but where the electrolyte film and lead contacted.

The all-solid-state battery of comparative example 1, which utilizes nickel leads and has no lead contact with the electrolyte film, also exhibited similar performance to example 1 in the first cycle. However, as can be seen by comparing and contrasting FIGS. 5 and 6, the performance of the all-solid-state battery of comparative example 1 deteriorated rapidly with each cycle due to deviations in performance caused by damage to the negative electrode. Therefore, it can be seen that the objective of the present invention can be achieved only by using aluminum leads in addition to no contact between the electrolyte and the leads.

## Claims

1. A lead tab for bonding to electrode tabs of an electrode assembly for an all-solid-state battery to form a bonding portion, wherein a lead included in the bonding portion comprises aluminum.

2. The lead tab for bonding to electrode tabs of claim 1, wherein the lead comprises aluminum in an amount of 50 to 100 wt%, relative to a total weight of the lead.

3. The lead tab for bonding to electrode tabs of claim 2, wherein, the lead comprises aluminum in an amount of less than 100 wt% based on the total weight of the lead, and the lead further comprises one selected from a group consisting of: copper, manganese, silicon, magnesium, zinc, and nickel.

4. The lead tab for bonding to electrode tabs of claim 1, wherein the lead comprises aluminum plated on a surface of a metal selected from a group consisting of: copper, manganese, silicon, magnesium, zinc, and nickel.

5. The lead tab for bonding to electrode tabs of claim 1, wherein the lead tab is applied for at least one of bonding positive electrode tabs and bonding negative electrode tabs.

6. The lead tab for bonding to electrode tabs of claim 5, wherein the lead tab is applied both for bonding positive electrode tabs and for bonding negative electrode tabs.

7. The lead tab for bonding to electrode tabs of claim 1, wherein the electrode tabs of the electrode assembly for the all-solid-state battery are electrode tabs of the electrode assembly for a sulfide-based all-solid-state battery.

8. An all-solid-state battery comprising: a positive electrode, a negative electrode, and a solid electrolyte interposed between the positive and negative electrodes, wherein the lead tab according to claim 1 is bonded to the electrode tabs.

9. The all-solid-state battery of claim 8, wherein the all-solid-state battery includes a positive electrode lead tab bonded to positive electrode tabs and a negative electrode lead tab bonded to negative electrode tabs, and one or more leads among the positive electrode lead tab and negative electrode lead tab comprises aluminum and are bonded to the electrode tabs.

10. The all-solid-state battery of claim 8, wherein an electrolyte is not in contact with the lead tabs included in the all-solid-state battery.

11. The all-solid-state battery of claim 8, wherein an end of the lead tab in a direction of bonding with the electrode tabs is located at a distance of between 1.1 and 5 times an average distance between an electrode end and an electrolyte end from the edge of the electrode assembly from which the electrode tabs are drawn.

12. The all-solid-state battery of claim 8, wherein the all-solid-state battery is a sulfide-based all-solid-state battery.
